# EUROPEAN PATENT APPLICATION

(11) **EP 4 834 472 A1**
(43) Date of publication of application: **04.11.2026**
(21) Application number: 24912918.0
(22) Date of filing: 25.12.2024
(51) Int. Cl.: B01J 23/882, B01J 35/61, B01J 35/73, B01J 37/02, B01J 37/04, B01J 37/18, C01C 1/04

(54) **CATALYST FOR AMMONIA SYNTHESIS**

(30) Priority: 28.12.2023 JP 2023222657
(71) Applicant: Kuraray Co., Ltd., Kurashiki-shi, Okayama 710-0801 (JP); RIKEN, Wako-shi, Saitama 351-0198 (JP)
(72) Inventor: OKUYAMA, Keisuke, Osaka-shi, Osaka 530-8611 (JP); IWASAKI, Hideharu, Osaka-shi, Osaka 530-8611 (JP); KAMIGUCHI, Satoshi, Wako-shi, Saitama 351-0198 (JP); HOU, Zhaomin, Wako-shi, Saitama 351-0198 (JP)
(74) Representative: Müller-Boré & Partner Patentanwälte PartG mbB
(86) International application number: PCT/JP2024/045931
(87) International publication number: WO 2025/143032

(57) **Abstract**

The present invention relates to: an ammonia synthesis catalyst precursor comprising: a nitrogen activation catalyst precursor-supporting body (A1) comprising a nitrogen-activating catalyst component precursor supported on a carrier composed of a porous body having a specific surface area of 1000 m²/g or more; and a hydrogen activation catalyst precursor-supporting body (B1) comprising a hydrogen-activating catalyst component precursor supported on a carrier different from the preceding carrier; and an ammonia synthesis catalyst obtained by activating the catalyst precursor.

## Description

### TECHNICAL FIELD

The present invention relates to an ammonia synthesis catalyst precursor, an ammonia synthesis catalyst, methods for producing the same, and a method for producing ammonia using the ammonia synthesis catalyst.

### BACKGROUND ART

Techniques for fixing and utilizing nitrogen atoms are extremely important in industrial fields, comprising the agricultural field. While nitrogen fixation is known in nature through, for example, rhizobia, it is industrially conducted exclusively by the Haber-Bosch process for use in ammonia synthesis. However, since the Haber-Bosch process uses a stable iron catalyst, it requires very high temperature and high pressure conditions to operate efficiently. Therefore, a technique for conducting ammonia synthesis under a milder environment in place of the Haber-Bosch process is desired. As such a technique, ammonia synthesis catalysts using transition metals other than iron and corresponding synthesis methods have been proposed in recent years. For example, Cited Document 1 discloses an ammonia synthesis catalyst comprising a halide cluster of a transition metal atom belonging to Group V, Group VI, or Group VII supported on a carrier.

### PRIOR ART DOCUMENT

### PATENT DOCUMENT

Patent Document 1: WO 2018/164182 A

### SUMMARY OF THE INVENTION

### PROBLEMS TO BE SOLVED BY THE INVENTION

However, the catalyst as disclosed in Patent Document 1 is a complex catalyst system and does not always exhibit sufficient activity for an ammonia synthesis. Therefore, further improvement is required for industrial application.

An object of the present invention is to provide an ammonia synthesis catalyst and a precursor thereof, the catalyst being capable of synthesizing ammonia under a relatively mild environment and having high catalytic activity suitable for industrial applications.

### SOLUTIONS TO THE PROBLEMS

The present inventors made intensive and extensive studies for the purpose of solving the problem, and as a result, the present invention has been accomplished. That is, the present invention includes the following preferred aspects.
[1] An ammonia synthesis catalyst precursor comprising: a nitrogen activation catalyst precursor-supporting body (A1) comprising a nitrogen-activating catalyst component precursor supported on a carrier composed of a porous body having a specific surface area of 1000 m²/g or more; and a hydrogen activation catalyst precursor-supporting body (B1) comprising a hydrogen-activating catalyst component precursor supported on a carrier different from the preceding carrier.
[2] The ammonia synthesis catalyst precursor according to [1], wherein the carrier composed of the porous body is a carrier having a ratio of an iodine adsorption amount to a methylene blue adsorption amount (iodine adsorption amount/methylene blue adsorption amount) of 10 or less.
[3] The ammonia synthesis catalyst precursor according to [1] or [2], wherein the nitrogen-activating catalyst component precursor is a metal complex comprising at least one metal atom belonging to Group V, Group VI, or Group VII.
[4] The ammonia synthesis catalyst precursor according to any one of [1] to [3], wherein the nitrogen-activating catalyst component precursor comprises at least one metal atom selected from the group consisting of molybdenum (Mo), niobium (Nb), tungsten (W), tantalum (Ta), and rhenium (Re).
[5] The ammonia synthesis catalyst precursor according to [3], wherein the metal complex is a polynuclear metal complex comprising at least three metal atoms selected from the group consisting of molybdenum (Mo), niobium (Nb), tungsten (W), tantalum (Ta), and rhenium (Re).
[6] The ammonia synthesis catalyst precursor according to any one of [1] to [5], wherein the carrier composed of the porous body is a carbonaceous material.
[7] The ammonia synthesis catalyst precursor according to any one of [1] to [6], wherein the hydrogen-activating catalyst component precursor comprises at least one transition metal selected from the group consisting of iron (Fe), cobalt (Co), rhodium (Rh), iridium (Ir), nickel (Ni), copper (Cu), palladium (Pd), and platinum (Pt).
[8] The ammonia synthesis catalyst precursor according to any one of [1] to [7], wherein the carrier supporting the hydrogen-activating catalyst component precursor is a porous body of an inorganic material, or a layered compound.
[9] The ammonia synthesis catalyst precursor according to [8], wherein the inorganic material comprises at least one selected from the group consisting of carbon, boron nitride, carbon nitride, silica, alumina, aluminosilicate, sodium aluminosilicate, aluminum magnesium hydroxide carbonate, titania, titanosilicate, zirconia, zirconosilicate, zinc oxide, and ceria.
[10] A method for producing the ammonia synthesis catalyst precursor according to any one of [1] to [9], comprising:
   making a carrier composed of a porous body support a nitrogen-activating catalyst component precursor to form a nitrogen activation catalyst precursor-supporting body (A1) comprising a nitrogen-activating catalyst component precursor supported on the carrier; and
   mixing a hydrogen activation catalyst precursor-supporting body (B1) comprising a hydrogen-activating catalyst component precursor supported on a carrier different from the carrier composed of the porous body, with the supporting body (A1).
[11] The method according to [10], wherein the nitrogen-activating catalyst component precursor is a polynuclear metal complex having at least three metal atoms, and the hydrogen-activating catalyst component precursor is a metal compound comprising metal.
[12] An ammonia synthesis catalyst comprising: a nitrogen activation catalyst-supporting body (A2) comprising a nitrogen-activating catalyst component supported on a carrier composed of a porous body having a specific surface area of 1000 m²/g or more; and a hydrogen activation catalyst-supporting body (B2) comprising a hydrogen-activating catalyst component supported on a carrier different from the preceding carrier.
[13] A method for producing the ammonia synthesis catalyst according to [12], comprising bringing the ammonia synthesis catalyst precursor according to any one of [1] to [9] into contact with hydrogen molecules.
[14] A method for producing ammonia, comprising bringing the ammonia synthesis catalyst according to [12] into contact with a mixed gas comprising nitrogen and hydrogen.

### EFFECTS OF THE INVENTION

According to the present invention, there are provided an ammonia synthesis catalyst and a precursor thereof, the catalyst being capable of synthesizing ammonia under a relatively mild environment and having high catalytic activity suitable for industrial applications.

### DETAILED DESCRIPTION

Hereinafter, embodiments of the present invention will be described in detail. The scope of the present invention is not limited to the embodiments described herein, and various modifications can be made within a scope not impairing the spirit of the present invention.

### <Ammonia synthesis catalyst precursor>

### (Nitrogen activation catalyst precursor-supporting body)

The ammonia synthesis catalyst precursor of the present invention comprises a nitrogen activation catalyst precursor-supporting body (A1) (hereinafter, also simply referred to as "supporting body (A1)") comprising a nitrogen-activating catalyst component precursor (hereinafter, also referred to as "nitrogen activation catalyst precursor") supported on a carrier. In the present description, the nitrogen activation catalyst precursor means, for example, a substance that expresses catalytic activity as a nitrogen activation catalyst by performing an appropriate activation treatment such as activation by hydrogen molecules described later. The supporting body (A1) refers to a material comprising a nitrogen activation catalyst precursor and a carrier, wherein the catalyst precursor is in a state of being supported on the carrier. A chemical bond may or may not be formed between the nitrogen activation catalyst precursor and the carrier.

In the present invention, examples of the nitrogen activation catalyst precursor comprised in the supporting body (A1) include various metal atoms that may function as a nitrogen activation catalyst by an activation treatment. In particular, the nitrogen activation catalyst precursor preferably comprises at least one metal atom belonging to Group V, Group VI, or Group VII of the periodic table because a metal complex or a metal cluster suitable for the present invention described later can be formed. Examples of a transition metal atom belonging to Group V include V (vanadium), Nb (niobium), and Ta (tantalum). Examples of a transition metal atom belonging to Group VI include Cr (chromium), Mo (molybdenum), and W (tungsten). Examples of a transition metal atom belonging to Group VII include Re (rhenium). Among them, the nitrogen activation catalyst precursor preferably comprises at least one metal atom selected from the group consisting of molybdenum, niobium, tungsten, tantalum, and rhenium. When the nitrogen activation catalyst precursor comprises the metal atom described above, an ammonia synthesis catalyst superior in thermal stability and/or catalytic activity can be obtained. These may be used alone or in combination of two or more thereof.

In the present invention, when the nitrogen activation catalyst precursor comprises a metal atom such as those described above, the nitrogen activation catalyst precursor is usually a metal complex comprising such a metal atom. As previously described, the ammonia synthesis catalyst precursor is in a state prior to the activation treatment for exhibiting catalytic performance. When the nitrogen activation catalyst precursor comprises a metal atom, the terms "metal complex" and "polynuclear metal complex" refer to a composite state of a metal atom and a ligand bonded to each other (for example, a halide cluster). In the present description, a "metal complex" refers to a compound that forms a metal complex molecule, and is distinguished from a compound such as a metal oxide, which does not form a metal complex molecule. For example, as described later, a metal cluster can be formed by eliminating a ligand from a metal complex on a carrier. The metal cluster functions as a nitrogen activation catalyst component in the ammonia synthesis catalyst. Incidentally, the metal cluster refers to a metal material having a nanocluster structure formed by directly bonding metal atoms as nuclei to each other.

In one embodiment of the present invention, the nitrogen activation catalyst precursor is preferably a metal complex comprising at least one metal atom belonging to Group V, Group VI, or Group VII of the periodic table, and more preferably a metal complex comprising at least one metal atom selected from the group consisting of molybdenum, niobium, tungsten, tantalum, and rhenium. From the viewpoint of forming a catalyst that can maintain high catalytic activity and can be stably stored in air, the metal atom is more preferably selected from the group consisting of molybdenum, niobium, tungsten, and tantalum, particularly preferably molybdenum or tungsten, and extremely preferably molybdenum.

The metal complex may be either a mononuclear metal complex comprising one metal atom per molecule or a polynuclear metal complex comprising a plurality of metal atoms per molecule. In one embodiment of the present invention, the nitrogen activation catalyst component is preferably a polynuclear metal complex because this has many sites for activating nitrogen and can maintain high catalytic activity. When the nitrogen activation catalyst precursor is a polynuclear metal complex formed from a metal complex with multiple nuclei, the number of the nuclei, that is, the number of metal atoms per molecule can be appropriately determined according to the type of constituent metal atoms and metal complex-supporting carrier but it is preferably at least three. When the metal complex has at least three metal atoms, a nanocluster structure consisting only of metal atoms can be suitably formed. An excessively small number of the metal atoms forms a small metal cluster, which tends to result in fewer nitrogen-activating sites or lower stability. Conversely, an excessively large number of metal atoms forms an oversized metal cluster susceptible to thermal reduction and metallization, tending to reduce the number of nitrogen-activating sites. From the viewpoint of sufficiently securing sites for activating nitrogen, the number of the metal atoms (the number of the nuclei) in the metal complex is preferably 3 or more and 200 or less, and more preferably 3 or more and 20 or less. In addition, the polynuclear metal complex preferably comprises at least three metal atoms belonging to Group V, Group VI, or Group VII of the periodic table, and more preferably comprises at least three metal atoms selected from the group consisting of molybdenum, niobium, tungsten, tantalum, and rhenium to achieve higher catalytic activity.

In the present invention, the nitrogen activation catalyst precursor is supported on a carrier composed of a porous body having a specific surface area of 1000 m²/g or more. When the specific surface area of the carrier is 1000 m²/g or more, the nitrogen activation catalyst precursor to be supported in an appropriate size, thereby improving the catalytic activity of the resulting catalyst in ammonia synthesis. In particular, when the nitrogen activation catalyst precursor is a metal complex (especially, a polynuclear metal complex), the relatively large specific surface area of the carrier is especially effective in preventing the aggregation of the catalyst precursor during impregnation. From the viewpoint of further enhancing that effect, the specific surface area of the carrier (porous body) supporting the nitrogen activation catalyst precursor in the present invention is preferably 1100 m²/g or more, more preferably 1200 m²/g or more, still more preferably more than 1200 m²/g, and particularly preferably 1250 m²/g or more. In addition, from the viewpoint of the mechanical strength and stability of the supporting body (A1), the specific surface area of the carrier (porous body) is preferably 5000 m²/g or less, more preferably 4000 m²/g or less, and still more preferably 3000 m²/g or less. In one embodiment of the present invention, the specific surface area of the carrier (porous body) supporting the nitrogen activation catalyst precursor is preferably 1000 to 5000 m²/g, more preferably 1200 to 4000 m²/g, and still more preferably 1250 to 3000 m²/g.

In the present description, the specific surface area means a "BET specific surface area". The BET specific surface area can be calculated by a nitrogen adsorption method. In detail, the BET specific surface area can be calculated, for example, by the method described in Examples described later.

Examples of the carrier supporting the nitrogen activation catalyst precursor include a porous body of an inorganic material. Examples thereof include a carbonaceous material such as activated carbon, boron nitride, carbon nitride, silica (silicon oxide), alumina (aluminum oxide), zeolite (aluminosilicate or sodium aluminosilicate), aluminum magnesium hydroxide carbonate, titania (titanium oxide), titanosilicate, zirconia (zirconium oxide), zirconosilicate, zinc oxide, and ceria (cerium oxide). A material encompassing a naturally derived material and a synthetically derived material, such as zeolite, may be either type of material. These carriers may be used alone, or in combination of two or more thereof.

Among them, a porous body of an inorganic material is preferable. Furthermore, from the viewpoint of the stability of the carrier and the nitrogen activation catalyst precursor at a high temperature, the carrier is preferably selected from the group consisting of a carbonaceous material, silica, alumina, zeolite, zirconia, titania, and ceria, more preferably selected from the group consisting of a carbonaceous material, silica, titania, and ceria, and still more preferably a carbonaceous material.

The carrier supporting the nitrogen activation catalyst precursor preferably has a ratio of an iodine adsorption amount to a methylene blue adsorption amount (iodine adsorption amount/methylene blue adsorption amount, hereinafter also referred to as "iodine value/MB value") of 10 or less. The value of iodine value/MB value reflects the ratio of micropores to mesopores in the carrier. An iodine value/MB value of 10 or less enables the nitrogen activation catalyst precursor to be easily supported in an appropriate size, thereby improving the catalytic activity of the resulting catalyst in ammonia synthesis. In particular, a porous body having more micropores than mesopores is especially effective in preventing the aggregation of catalyst precursor such as a polynuclear metal complex during impregnation. It is noted that micropores refer to pores having a size of less than about 2 nm, and mesopores refer to pores having a size of about 2 to 50 nm.

In one embodiment of the present invention, the iodine value/MB value is preferably 1.1 to 10, more preferably 1.5 to 9, and still more preferably 2 to 8. Maintaining the iodine value/MB value within the above range can ensure that the catalyst precursor such as a polynuclear metal complex is independently supported on the carrier, thereby preserving high contact efficiency between the reaction medium and the catalyst precursor or the activated catalyst component. Therefore, it is possible to obtain an ammonia synthesis catalyst resistant to sintering and capable of maintaining high catalytic performance. In the present invention, by having the above-described specific surface area and an iodine value/MB value within the specific range, the carrier supporting the nitrogen activation catalyst precursor allows for a further improvement of the above-mentioned effects. From the viewpoint of easily controlling the specific surface area and the iodine value/MB value to the specific ranges, respectively, in one embodiment of the present invention, the carrier supporting the nitrogen activation catalyst precursor is preferably a carbonaceous material, particularly preferably activated carbon.

The iodine value/MB value is calculated by the following method. Iodine value: In accordance with JIS K 1474, activated carbon is added in varied amounts to a 0.05 mol/L iodine solution (potassium iodide is also dissolved: 0.15 mol/L), and the mixture is shaken for 15 minutes. Then, the activated carbon-containing solution is centrifuged. The supernatant is titrated with a 0.1 mol/L sodium thiosulfate solution to determine the residual iodine concentration, and an adsorption isotherm is then created. On the basis of the adsorption isotherm created, the adsorption amount at a residual iodine concentration of 2.5 g/L is taken as an iodine value. MB value: In accordance with JIS K 1474, measurement is conducted in a method similar to that for the iodine value, and an MB value is calculated. From the values obtained above, the iodine value/MB value can be calculated. In detail, the iodine value/MB value can be calculated, for example, by the method described in Examples described later.

In one embodiment of the present invention, the volume-weighted average particle size (D₅₀) of the carrier supporting the nitrogen activation catalyst precursor is preferably 0.1 to 800 µm, more preferably 0.5 to 600 µm, and still more preferably 1 to 500 µm. Maintaining the average particle size within the above range can increase the contact efficiency between the reaction medium and the catalyst precursor or the activated catalyst component, thereby improving the catalytic activity. In particular, adjusting the D₅₀ of the carrier of the supporting body (A1) relative to that of the carrier of the supporting body (B1) of the hydrogen-activating catalyst precursor (hereinafter, also simply referred to as "supporting body (B1)") may further enhance the catalytic performance of the resulting ammonia synthesis catalyst.

In the present invention, the volume-weighted average particle size (D₅₀) refers to the particle size at which a cumulative volume from the fine particle side reaches 50% in a particle size distribution measured by a laser scattering method. The same applies to the supporting body (B1) supporting a hydrogen activation catalyst precursor described later. D₅₀ can be determined, for example, by the method described in Examples described later.

In the present invention, the loading amount of the nitrogen activation catalyst precursor on the carrier may be appropriately determined depending on the types of the catalyst precursor, and the carrier. For example, when the nitrogen activation catalyst precursor is a metal complex, the loading amount on the carrier is usually 0.01 to 100 mass%, preferably 0.05 to 50 mass%, more preferably 0.1 to 30 mass%, and still more preferably 0.5 to 20 mass% as the metal amount based on the mass of the carrier. A loading amount within the above range is preferable from the viewpoint of stability and catalytic activity of the ammonia synthesis catalyst precursor and the catalyst. It may also be advantageous in terms of economic efficiency.

The supporting body (A1) may further comprise additional components, such as a catalyst precursor other than the nitrogen activation catalyst precursor and an additive (hereinafter, also collectively referred to as "additional component (A)"). To sufficiently secure the action of the nitrogen activation catalyst precursor in the supporting body (A1), the amount of the nitrogen activation catalyst precursor in the supporting body (A1) is preferably 80 mass% or more, more preferably 85 mass% or more, still more preferably 90 mass% or more, particularly preferably 95 mass% or more, and may be 100 mass% based on the total amount of the components other than the carrier in the supporting body (A1). The content of the additional component (A) in the supporting body (A1) is preferably 0 to 10 mass%, more preferably 0 to 5 mass%, and still more preferably 0 to 3 mass% based on the total amount of the components other than the carrier in the supporting body (A1).

In the present invention, the supporting body (A1) may be obtained by impregnating a nitrogen activation catalyst precursor onto a carrier. Specifically, for example, the supporting body (A1) in which a metal complex is supported on a carrier may be obtained by supporting, on the carrier, a metal complex comprising a metal atom to serve as a nitrogen activation catalyst precursor, preferably a polynuclear metal complex having at least three metal atoms.

The polynuclear metal complex for forming a metal cluster to serve as a nitrogen activation catalyst component in an ammonia synthesis catalyst is preferably a halide cluster in which the ligand is a halogen atom. The halide cluster can eliminate a halogen atom as a ligand by being heated under an environment in which hydrogen is supplied, and can effectively form a metal cluster in a state of being adsorbed to the surface of the carrier. Cl, Br or I is preferable as the halogen atom. The halide cluster preferably has only a halogen atom as a ligand, or has a halogen atom and water.

In the present invention, the halide cluster may be, for example, M₆X₁₂, M₆X₁₂·nR, A₂M₆X₁₄, A₂M₆X₁₄·nR, EM₆X₁₄, EM₆X₁₄·nR, M₆X₈L₆, A₂M₆X₈L₆, M₆X₁₄, M₆X₁₄·nR, A₄M₆X₁₈, or A₄M₆X₁₈·nR. In the formulas, M represents a metal, X represents halogen, A and E represent positive monovalent and positive divalent cations, respectively, R represents a first ligand, L represents a second ligand, and n is a value between 0 and the sum of M + X. M is Mo, W, Cr, Mn, Tc, Re, Cu, Ti, V, Ta, Nb, Sn, Zn, Zr, or Ga, X is F, Cl, Br, I, or a mixture thereof, and A is H⁺, H₃O⁺, K⁺, Na⁺, Li⁺, ammonium (comprising quaternary ammonium). L is F, Cl, Br, I or a mixture thereof, E is Be²⁺, Mg²⁺, Ca²⁺, Sr²⁺, Cu²⁺, Ni²⁺, Ti²⁺, Ba²⁺, or a mixture thereof; and R is H₂O, CH₃CN, or any other solvate. Examples of the halide cluster include MoCl₂ (molybdenum(II) chloride). Molybdenum(II) chloride usually has a cluster structure. In general, six molybdenum metal atoms form a regular octahedron, and eight chlorine ligands in total are strongly coordinated to the individual faces of the regular octahedron to form a block like one atom as a whole. In addition, as to the six vertices of the regular octahedron, there are two terminal coordinating chlorines and four intervertex bridging ligands, and a solid cluster [(Mo₆Clᵢ₈)Clₐ₂Cl_{a-a4/2}] (wherein i denotes inner and a denotes outer) is formed. Furthermore, these chlorines may be replaced by water to form various halide clusters. Examples thereof include those described below.
· MoCl₂
· [Mo₆Cl₈]Cl₂Cl_{4/2}
· [(Mo₆Cl₈)Cl₄(H₂O)₂]
· (H₃O)₂[(Mo₆Cl₈)Cl₆]·6H₂O
· [(Mo₆Cl₈)Cl₄(H₂O)₂]·6H₂O
· [(Mo₆Cl₈)Cl₄(H₂O)₂]

Among them, [(Mo₆Cl₈)Cl₄(H₂O)₂], (H₃O)₂[(Mo₆Cl₈)Cl₆]·6H₂O, [(Mo₆Cl₈)Cl₄(H₂O)₂]·6H₂O, and [(Mo₆Cl₈)Cl₄(H₂O)₂] are preferable from the viewpoint of chemical stability.

Examples of the method for preparing the supporting body (A1) in which a polynuclear metal complex is supported on a carrier include:
a method of preparing a supporting body in which a polynuclear metal complex is supported by bonding mononuclear metal complexes together on a carrier;
a method of impregnating a previously prepared polynuclear metal complex onto a carrier; and
a method of dissolving a precursor in a solvent, impregnating the precursor onto a carrier, and then thermally changing the precursor. The polynuclear metal complex may be prepared by conventional synthetic methods known in synthetic chemistry depending on the desired metal complex structure.

As a method for impregnating the polynuclear metal complex to the carrier, for example, the following methods may be employed: a method in which the carrier is dispersed in a solution of the polynuclear metal complex dissolved in an appropriate solvent, and the polynuclear metal complex and the carrier are brought into contact with each other to impregnate the polynuclear metal complex onto the carrier; and a method in which the polynuclear metal complex is not dissolved in a solvent, and the polynuclear metal complex and the carrier are each dispersed in an appropriate solvent using physical means such as ultrasonic waves or strong shear, and these are brought into contact with each other to impregnate the polynuclear metal complex onto the carrier.

The solvent for dissolving or dispersing the polynuclear metal complex or the carrier may be appropriately selected depending on the type of the polynuclear metal complex or the carrier, the impregnation method to be employed. As the soluble solvent, for example, water, methanol, ethanol, may be used. As the non-solvent, for example, saturated hydrocarbons such as pentane, hexane, heptane, octane, cyclopentane, cyclohexane, and cyclooctane, and aromatic hydrocarbons such as benzene, toluene, and xylene may be used.

The conditions for impregnating the polynuclear metal complex to the carrier are not particularly limited, and may be appropriately determined depending on the types of the polynuclear metal complex, the carrier, and the solvent, the impregnation method to be employed. For example, the concentration of the polynuclear metal complex in the solvent may be 0.01 to 20 mass%, and preferably 0.05 to 10 mass%. The temperature at the time of impregnation may be, for example, in the range of -10 to 200°C, and may be preferably in the range of 0 to 100°C, and more preferably in the range of 10 to 60°C.

The contact between the polynuclear metal complex and the carrier may be conducted by adding the carrier to a solution in which the polynuclear metal complex is dissolved or dispersed, and stirring and shaking the solution using a publicly-known stirring device. The contact time may be appropriately determined depending on the types of the polynuclear metal complex, the carrier, and the solvent, the impregnation method to be employed.

The contact between the polynuclear metal complex and the carrier may be conducted under an atmosphere such as the air or an inert gas atmosphere such as nitrogen. From the viewpoint of safety, it is preferable to conduct the contact under an atmosphere of an inert gas such as nitrogen. After the impregnation to the carrier, the solvent used is removed by an operation such as filtration, and the product is dried, as necessary, whereby the supporting body (A1) in which the polynuclear metal complex is supported is obtained. Drying may be conducted under heating or under reduced pressure.

### (Hydrogen activation catalyst precursor-supporting body)

The ammonia synthesis catalyst precursor of the present invention comprises a hydrogen activation catalyst precursor-supporting body (B1) (hereinafter, also simply referred to as "supporting body (B1)") comprising hydrogen-activating catalyst component precursor (hereinafter, also referred to as "hydrogen activation catalyst precursor") supported on a carrier. In the present description, the hydrogen activation catalyst precursor means a substance that exhibits catalytic activity as a hydrogen activation catalyst by performing an appropriate activation treatment. The supporting body (B1) comprises a hydrogen activation catalyst precursor and a carrier, and the catalyst precursor is in a state of being supported on the carrier. A chemical bond may or may not be formed between the hydrogen activation catalyst precursor and the carrier.

In the present invention, examples of the hydrogen activation catalyst precursor comprised in the supporting body (B1) include various metal atoms that may function as a hydrogen activation catalyst by an activation treatment. Among them, from the viewpoint of catalytic activity, the hydrogen activation catalyst precursor preferably comprises at least one transition metal selected from among transition metals other than those of Group V, Group VI, and Group VII, and more preferably comprises at least one transition metal selected from the group consisting of iron (Fe), cobalt (Co), rhodium (Rh), iridium (Ir), nickel (Ni), copper (Cu), palladium (Pd), and platinum (Pt). These may be used alone or in combination of two or more thereof.

In the ammonia synthesis catalyst precursor of the present invention, the hydrogen activation catalyst precursor is supported on a carrier different from the carrier constituting the nitrogen activation catalyst precursor-supporting body (A1). Here, the phrase "supported on a carrier different" means that the hydrogen activation catalyst precursor is supported on a carrier separate and distinct from the carrier supporting the nitrogen activation catalyst precursor in the supporting body (A1) constituting the ammonia synthesis catalyst precursor. Therefore, in an appropriate case, the type of the carrier in the nitrogen activation catalyst-supporting body (A1) and the type of the carrier in the hydrogen activation catalyst-supporting body (B1) may be the same.

Conventionally, it is considered that when two catalyst components are supported on separate carriers, catalytic activity is usually deteriorated due to the physical distance generated between the catalyst components. In the present invention, however, it has been found that the catalytic activity of the resulting ammonia synthesis catalyst can be enhanced by supporting the hydrogen activation catalyst precursor on a carrier different from the carrier supporting the nitrogen activation catalyst precursor. Although the reason for this is not clear, it is considered that in the present invention, thanks to supporting a catalyst precursor on a carrier composed of a porous body having a certain large specific surface area, the catalyst precursors can be impregnated to the carriers in an appropriate size, whereby the contact efficiency between a reaction medium and the catalyst precursor or the catalyst component after activation is increased, and the catalytic activity can be improved. Further, for example, while a carbonaceous material such as activated carbon tends to have a relatively large specific surface area, the carbonaceous material is suitable as a carrier supporting a nitrogen activation catalyst or a precursor thereof as described above, a hydrogen activation catalyst or a precursor thereof often damages the carbonaceous material. In the present invention, it is possible to secure the advantages resulting from the use of the supporting body (A1) containing, as a carrier, a carbonaceous material, such as activated carbon, by supporting the nitrogen activation catalyst precursor and the hydrogen activation catalyst precursor on separate carriers, and at the same time, it is possible to obtain a stable ammonia synthesis catalyst that has high catalytic activity and is superior in sustainability of catalytic activity through selecting a carrier suitable for supporting the hydrogen activation catalyst precursor.

The carrier supporting the hydrogen activation catalyst precursor is preferably a carrier having a specific surface area of 10 m²/g or more. A carrier having a specific surface area of 10 m²/g or more allows the hydrogen activation catalyst precursor to be supported in an appropriate size, thereby improving the catalytic activity in ammonia synthesis. From the viewpoint of the mechanical strength and stability of the supporting body (B1) in addition to the catalytic activity, the specific surface area of the carrier in the supporting body (B1) is preferably 10 to 1000 m²/g (1000 m²/g or less, or less than 1000 m²/g), more preferably 10 to 800 m²/g, and still more preferably 10 to 500 m²/g.

The specific surface area means "BET specific surface area". The BET specific surface area can be calculated by a nitrogen adsorption method. In detail, the BET specific surface area can be calculated, for example, by the method described in Examples described later.

Examples of the carrier supporting the hydrogen activation catalyst precursor include a porous body of an inorganic material, or a layered compound. Examples of the porous body of the inorganic material include those recited above as examples of the carrier capable of supporting the nitrogen activation catalyst precursor. Examples of the layered compound include clays such as montmorillonite and kaolinite. These carriers may be used alone, or in combination of two or more thereof. Among them, the porous body of the inorganic material is preferable, and it is more preferable that the inorganic material comprises at least one selected from the group consisting of carbon, boron nitride, carbon nitride, silica, alumina, aluminosilicate, sodium aluminosilicate, aluminum magnesium hydroxide carbonate, titania, titanosilicate, zirconia, zirconosilicate, zinc oxide, and ceria. Furthermore, from the viewpoint of stability of the carrier and the hydrogen activation catalyst precursor at a high temperature, the carrier is preferably selected from the group consisting of silica, alumina, zeolite, zirconia, titania, and ceria, and more preferably selected from the group consisting of silica, titania, and ceria.

In one embodiment of the present invention, the volume-weighted average particle size (D₅₀) of the carrier supporting the hydrogen activation catalyst precursor is preferably 0.1 to 500 µm, more preferably 0.5 to 400 µm, and still more preferably 1 to 300 µm. When the average particle size is within the above range, the contact efficiency between the reaction medium and the catalyst precursor or the catalyst component after activation can be increased, which can lead to improvement of catalytic activity. In particular, the catalytic activity of a resulting ammonia synthesis catalyst can be further enhanced by adjusting the D₅₀ of the carrier of the supporting body (B1) in relation to the D₅₀ of the carrier of the supporting body of the catalyst that activates nitrogen.

In the present invention, the loading amount of the hydrogen activation catalyst precursor on the carrier can be appropriately determined depending on the types of the catalyst precursor, and the carrier. For example, when the hydrogen activation catalyst precursor is a transition metal like that described above, the loading amount on the carrier is usually 0.01 to 100 mass%, preferably 0.05 to 50 mass%, more preferably 0.1 to 30 mass%, and still more preferably 0.5 to 20 mass% as the metal amount based on the mass of the carrier. A loading amount within the above range is preferable from the viewpoint of stability and catalytic activity of the ammonia synthesis catalyst precursor and the catalyst. It may also be advantageous in terms of economic efficiency.

The supporting body (B1) may further comprise additional components such as a catalyst precursor other than the hydrogen activation catalyst precursor and an additive (hereinafter, also collectively referred to as "additional component (B)"). To sufficiently secure the action of the hydrogen activation catalyst precursor in the supporting body (B1), the amount of the hydrogen activation catalyst precursor in the supporting body (B1) is preferably 80 mass% or more, more preferably 85 mass% or more, still more preferably 90 mass% or more, particularly preferably 95 mass% or more, and may be 100 mass% based on the total amount of the components other than the carrier in the supporting body (B1). The content of the additional component (B) in the supporting body (B1) is preferably 0 to 10 mass%, more preferably 0 to 5 mass%, and still more preferably 0 to 3 mass% based on the total amount of the components other than the carrier in the supporting body (B1).

In the present invention, the supporting body (B1) may be obtained by impregnating a hydrogen activation catalyst precursor onto a carrier. The method for impregnating the hydrogen activation catalyst precursor to the carrier is not particularly limited, and for example, the following methods may be employed: a method in which the carrier is dispersed in a solution of the metal compound comprising a transition metal dissolved in an appropriate solvent, and the metal compound and the carrier are brought into contact with each other to impregnate the metal compound onto the carrier, and a method in which the metal compound is not dissolved in a solvent, and the metal compound and the carrier are each dispersed in an appropriate solvent using physical means such as ultrasonic waves or strong shear, and these are brought into contact with each other to impregnate the metal compound onto the carrier.

Examples of the metal compound to be used here include halides of transition metals other than those of Groups V, VI, and VII, such as iron, cobalt, rhodium, iridium, nickel, copper, palladium, and platinum; mineral acid salts such as nitrates and sulfates; salts of organic acids such as acetic acid and propionic acid; and salts having an organic ligand such as acetylacetonate.

The solvent for dissolving or dispersing the metal compound may be appropriately selected depending on the type of the metal compound or the carrier, the impregnation method to be employed. As the soluble solvent, for example, water; alcohols such as methanol and ethanol; esters such as ethyl acetate and methyl acetate; amides such as dimethylformamide, diethylformamide, dimethylacetamide, diethylacetamide, N-methylpyrrolidone, and N-ethylpyrrolidone; sulfoxides such as dimethyl sulfoxide; ethers such as diethyl ether, tetrahydrofuran, and tetrahydropyran may be used. As the non-solvent, for example, saturated hydrocarbons such as pentane, hexane, heptane, octane, cyclopentane, cyclohexane, and cyclooctane, and aromatic hydrocarbons such as benzene, toluene, and xylene may be used.

The conditions for impregnating the metal compound to the carrier are not particularly limited, and may be appropriately determined depending on the types of the metal compound, the carrier, and the solvent, the impregnation method to be employed. For example, the concentration of the metal compound in the solvent may be 0.01 to 20 mass%, and preferably 0.05 to 10 mass%. The temperature at the time of impregnation may be, for example, in the range of -10 to 200°C, and may be preferably in the range of 0 to 100°C, and more preferably in the range of 10 to 60°C.

The contact between the metal compound and the carrier can be conducted by adding the carrier to a solution in which the metal compound is dissolved or dispersed, and stirring and shaking the solution using a publicly-known stirring device. The contact time may be appropriately determined depending on the types of the metal compound, the carrier, and the solvent, the impregnation method to be employed.

The contact between the metal compound and the carrier may be conducted under an atmosphere such as the air or an inert gas atmosphere such as nitrogen. From the viewpoint of safety, it is preferable to conduct the contact under an atmosphere of an inert gas such as nitrogen. After the impregnation to the carrier, the solvent used is removed by an operation such as filtration, and the product is dried, as necessary, whereby the supporting body (B1) in which the metal compound is supported on the carrier is obtained. Drying may be conducted under heating or under reduced pressure.

In the present invention, to further stabilize the supporting body (B1) of the metal compound, the supporting body (B1) may be heat-treated, for example, under an inert gas or oxygen. The heat treatment temperature may be equal to or higher than the decomposition temperature of an inorganic salt, or an organic acid salt comprised in the metal compound. Usually, the heat treatment temperature is 150 to 800°C, and in consideration of stability, decomposition efficiency of the inorganic salt and the organic acid salt, and/or stabilization after decomposition, the heat treatment may be conducted preferably at 200 to 700°C, and more preferably at 250 to 600°C.

The ammonia synthesis catalyst precursor of the present invention comprises the supporting body (A1) and the supporting body (B1). In the ammonia synthesis catalyst precursor of the present invention, the content of the supporting body (A1) and the supporting body (B1) is not particularly limited, and the mass ratio of the supporting body (A1) : the supporting body (B1) may be, for example, 1 : 200 to 200 : 1, preferably in the range of 1 : 150 to 150 : 1, and more preferably in the range of 1 : 100 to 100 : 1.

In one embodiment of the present invention, when the larger one of D₅₀ of the carrier constituting the supporting body (A1) and D₅₀ of the carrier constituting the supporting body (B1) is defined as D₅₀-1 and the smaller one thereof is defined as D₅₀-2, the ratio D₅₀-1/D₅₀-2 is preferably 1 or more, and more preferably 1.5 or more. When D₅₀-1/D₅₀-2 is equal to or more than the lower limit, the supporting body (A1) and the supporting body (B1) can be uniformly mixed. Thus, the activity of the resulting ammonia synthesis catalyst can be enhanced. The D₅₀-1/D₅₀-2 is not necessarily limited, but is preferably 1 to 50, more preferably 1 to 30, still more preferably 1 to 20, and may be, for example, 1.5 to 50, 1.5 to 30, or 1.5 to 20. Either the supporting body (A1) or the supporting body (B1) may have a larger particle size.

In one embodiment of the present invention, the ammonia synthesis catalyst precursor of the present invention may comprise the supporting body (A1) and the supporting body (B1) in any combination as long as the catalyst precursor can exhibit an intended catalytic effect. Examples of such a combination include the following combinations:
· a combination of a supporting body (A1) comprising a nitrogen activation catalyst precursor comprising at least one metal atom selected from the group consisting of molybdenum, niobium, tungsten, tantalum, and rhenium and a carrier that is a porous body of an inorganic material, and a supporting body (B1) comprising a hydrogen activation catalyst precursor comprising at least one transition metal selected from the group consisting of iron (Fe), cobalt (Co), rhodium (Rh), iridium (Ir), nickel (Ni), copper (Cu), palladium (Pd), and platinum (Pt) and a carrier that is a porous body of an inorganic material;
· a combination of a supporting body (A1) comprising a nitrogen activation catalyst precursor comprising at least one metal atom selected from the group consisting of molybdenum, niobium, tungsten, tantalum, and rhenium and a carrier selected from the group consisting of a carbonaceous material, silica, silica alumina, alumina, zeolite, zirconia, titania, and ceria, and a supporting body (B1) comprising a hydrogen activation catalyst precursor comprising at least one transition metal selected from the group consisting of iron (Fe), cobalt (Co), rhodium (Rh), iridium (Ir), nickel (Ni), copper (Cu), palladium (Pd), and platinum (Pt) and a carrier selected from the group consisting of silica, silica alumina, alumina, zeolite, zirconia, titania, ceria, magnesium oxide, calcium oxide, and barium oxide;
· a combination of a supporting body (A1) comprising a nitrogen activation catalyst precursor comprising at least one metal atom selected from the group consisting of molybdenum, niobium, tungsten, tantalum, and rhenium and a carrier selected from the group consisting of a carbonaceous material, silica, titania, and ceria, and a supporting body (B1) comprising a hydrogen activation catalyst precursor comprising at least one transition metal selected from the group consisting of iron (Fe), cobalt (Co), rhodium (Rh), iridium (Ir), nickel (Ni), copper (Cu), palladium (Pd), and platinum (Pt) and a carrier selected from the group consisting of silica, titania, zirconia, and ceria;
· a combination of a supporting body (A1) comprising a nitrogen activation catalyst precursor comprising at least one metal atom selected from the group consisting of molybdenum, niobium, tungsten, tantalum, and rhenium and a carrier that is a carbonaceous material, and a supporting body (B1) comprising a hydrogen activation catalyst precursor comprising at least one transition metal selected from the group consisting of iron (Fe), cobalt (Co), rhodium (Rh), iridium (Ir), nickel (Ni), copper (Cu), palladium (Pd), and platinum (Pt) and a carrier selected from the group consisting of silica, titania, zirconia, and ceria.

The ammonia synthesis catalyst precursor of the present invention may comprise components other than the supporting body (A1) and the supporting body (B1) as long as the catalyst precursor can exhibit an intended catalytic effect. To sufficiently secure the effect as an ammonia synthesis catalyst, the total amount of the supporting body (A1) and the supporting body (B1) in the ammonia synthesis catalyst precursor is preferably 90 mass% or more, more preferably 95 mass% or more, still more preferably 98 mass% or more, and particularly preferably 99 mass% or more, and may be 100 mass%, based on the total amount of the ammonia synthesis catalyst precursor. In other words, the total amount of the components other than the supporting body (A1) and the supporting body (B1) in the ammonia synthesis catalyst precursor is preferably 10 mass% or less, more preferably 5 mass% or less, still more preferably 2 mass% or less, particularly preferably 1 mass% or less, and may be 0 mass%, based on the total amount of the ammonia synthesis catalyst precursor.

### (Method for producing ammonia synthesis catalyst precursor)

The ammonia synthesis catalyst precursor of the present invention may be obtained, for example, by a method comprising:
making a carrier composed of a porous body support a nitrogen-activating catalyst component precursor to form a nitrogen activation catalyst precursor-supporting body (A1) on the carrier; and
mixing a hydrogen activation catalyst precursor-supporting body (B1) comprising a hydrogen-activating catalyst precursor supported on a carrier different from the carrier composed of the porous body, with the supporting body (A1).

In the method for producing the ammonia synthesis catalyst precursor of the present invention, the supporting body (A1) and the supporting body (B1) may be formed by the preparation methods described in the previous section of the nitrogen activation catalyst precursor-supporting body and the section of the hydrogen activation catalyst precursor-supporting body, respectively. As the supporting body (A1), a supporting body (A1) of a polynuclear metal complex having at least three metal atoms that may serve as a nitrogen activation catalyst precursor is preferable. As the supporting body (B1), a supporting body (B1) of a metal compound comprising a metal that may serve as a hydrogen activation catalyst precursor is preferable.

The method for mixing the supporting body (A1) and the supporting body (B1) is not particularly limited, and for example, the supporting body (A1) and the supporting body (B1) may be mixed using a common powder mixer such as a stirrer, a V-type mixer, a conical mixer, a ribbon mixer, a rocking mixer, a vibration mixer, a vibration sieve, or a screw kneader.

A mixture obtained by mixing the supporting body (A1) and the supporting body (B1) may be used in the next step in a powdery form as an ammonia synthesis catalyst precursor. Alternatively, it may be molded into a lump form, or a tablet form. The molding method is not particularly limited, and may be pressure molding or a method of fixing the mixture using a pressure-sensitive adhesive, a binder. In consideration of the temperature and the pressure when used for ammonia synthesis, it is preferable to perform molding under pressure using a binder.

Examples of the binder include carbon materials such as graphite and carbon black, and metal oxides such as silica, alumina, titania, and zirconia. When the binder is used, the use amount thereof is usually preferably 0.1 to 100 parts by mass, more preferably 0.2 to 50 parts by mass, and still more preferably 0.5 to 20 parts by mass, based on the total mass of the supporting body (A1) and the supporting body (B1).

When molding is conducted under pressure, the pressure applied to molding may be such that the catalyst is not crushed when filled in a reactor, and is usually in the range of 1 to 5000 kg/cm², preferably in the range of 10 to 3000 kg/cm², and more preferably in the range of 20 to 2000 kg/cm².

In the ammonia synthesis catalyst precursor of the present invention, the nitrogen activation catalyst precursor and the hydrogen activation catalyst precursor are supported on separate carriers, whereby the nitrogen activation catalyst precursor and the hydrogen activation catalyst precursor may be supported on carriers suitable according to their characteristics. Therefore, a stable ammonia synthesis catalyst having high catalytic activity and being superior in sustainability of catalytic activity can be obtained. In particular, when the nitrogen activation catalyst component precursor is a polynuclear metal complex, preferably a halide cluster, a metal atom and a halogen atom form a strong bond, and the precursor is hardly affected by oxygen and moisture, so that the precursor can be stably stored in a state of being supported on a carrier.

### <Ammonia synthesis catalyst>

By applying an appropriate activation treatment to the ammonia synthesis catalyst precursor of the present invention, which is a mixture of the supporting body (A1) and the supporting body (B1), an ammonia synthesis catalyst comprising: a nitrogen activation catalyst-supporting body (A2) comprising a nitrogen-activating catalyst component supported on a carrier composed of a porous body having a specific surface area of 1000 m²/g or more; and a hydrogen activation catalyst-supporting body (B2) comprising a hydrogen-activating catalyst component supported on a carrier different from the preceding carrier is obtained. Therefore, the present invention is directed to an ammonia synthesis catalyst comprising: a nitrogen activation catalyst-supporting body (A2) comprising a nitrogen-activating catalyst component supported on a carrier composed of a porous body having a specific surface area of 1000 m²/g or more; and a hydrogen activation catalyst-supporting body (B2) comprising a hydrogen-activating catalyst component supported on a carrier different from the preceding carrier.

In the present invention, the method for activating the nitrogen activation catalyst precursor and the hydrogen activation catalyst precursor may be, for example, a method of bringing the ammonia synthesis catalyst precursor of the present invention into contact with hydrogen molecules. For example, the step of activating the ammonia synthesis catalyst precursor of the present invention with hydrogen molecules (hereinafter, also referred to as "activation step") is a step of activating both the supporting body (A1) and the supporting body (B1) by a flow reaction of continuously supplying hydrogen. For example, when in the ammonia synthesis catalyst precursor of the present invention, the supporting body (A1) is a supporting body of a polynuclear metal complex, which is a halide cluster, and the supporting body (B1) is a supporting body of a metal compound, the catalyst precursor may be activated as follows: by supplying hydrogen to the catalyst precursor, a halogen atom is eliminated from the halide cluster in the supporting body (A1), and the halide cluster is reduced to a metal atom at the same time. As a result, the supporting body (A2) of a nitrogen activation catalyst in which a metal cluster is supported on the carrier is formed. In the supporting body (B1), for example, oxygen is eliminated from the oxidation-stabilized metal component by hydrogen reduction, so that the metal component is reduced to a metal atom. As a result, a supporting body (B2) of a hydrogen activation catalyst in which the metal atom is supported on the carrier is formed. For example, the halogen atom eliminated from the halide cluster in the activation step may be discharged to the outside of the reaction system together with hydrogen gas as an acid such as hydrochloric acid or oxalic acid. The generated water may be discharged to the outside of the reaction system together with hydrogen.

The activation step may be conducted using a publicly-known apparatus. For example, the activation step may be conducted by filling an upright reaction tube with the ammonia synthesis catalyst precursor of the present invention. From the viewpoint of high resistance to acid, it is preferable to use a highly corrosion-resistant reaction tube formed of preferably, for example, Stainless Steel 316, or Inconel, and more preferably Inconel as the reaction tube to be used in the activation step.

The supply of hydrogen may be conducted, for example, by flowing hydrogen in the reaction tube filled with the ammonia synthesis catalyst precursor of the present invention. A flow reaction may be conducted by flowing hydrogen (hydrogen gas) while heating the inside of the reaction tube at a temperature of 400 to 700°C.

In the present invention, the concentration of hydrogen to be flowed is preferably substantially 100% from the viewpoint of stably exhibiting the effect of reduction, but a method of gradually increasing the concentration from a low concentration of, for example, about 1% may be employed in order to inhibit the adsorption of hydrogen, excessive heat generation due to a rapid reduction treatment, and aggregation of metal components that may be generated along with an activation step. In this case, an inert gas such as nitrogen, helium, or argon may be used as the gas for dilution. The time of flowing hydrogen is not particularly limited, and may be appropriately determined depending on the treatment temperature and the treatment concentration of hydrogen. For example, the flowing hydrogen may be conducted within a range of about 0.1 to 24 hours, and preferably 0.5 to 20 hours. The flow reaction may be suitably conducted at an absolute pressure of the gas within a range of 0.1 to 0.2 MPa. The flowing of the gas may be continuous, or may be conducted by a method of supplying the gas intermittently.

The ammonia synthesis catalyst of the present invention can be obtained through an activation step by forming a nitrogen activation catalyst-supporting body (A2) and a hydrogen activation catalyst-supporting body (B2) from the ammonia synthesis catalyst precursor of the present invention, which is a mixture of the supporting body (A1) and the supporting body (B1).

### <Method for producing ammonia>

The ammonia synthesis catalyst of the present invention is capable of synthesizing ammonia under a relatively mild environment, and exhibits high catalytic activity suitable for industrial applications. Therefore, the present invention is directed to a method for producing ammonia comprising bringing the ammonia synthesis catalyst of the present invention into contact with a mixed gas comprising nitrogen and hydrogen.

The synthesis of ammonia using the ammonia synthesis catalyst of the present invention may be conducted using a publicly-known ammonia synthesis apparatus. For example, the ammonia synthesis may be conducted following or simultaneously with the activation step in the method for producing the ammonia synthesis catalyst, in the reaction tube in which the activation step has been conducted. Specifically, ammonia can be synthesized by heating the ammonia synthesis catalyst under a temperature condition suitable for ammonia synthesis and flowing a mixed gas comprising nitrogen and hydrogen in the reaction tube.

The flow reaction in ammonia synthesis is started, for example, in a state of being heated within a temperature range of 50 to 700°C, and may be conducted preferably in a range of 250 to 500°C, more preferably 270 to 480°C, and still more preferably 280 to 450°C. When the temperature in the flow reaction is within the above range, the catalytic activity can be sufficiently enhanced, and a decrease in activity due to sintering of the catalyst component can be suppressed. Therefore, ammonia can be efficiently synthesized under high catalytic activity.

In the flow reaction, ammonia can be continuously synthesized by bringing a mixed gas comprising nitrogen and hydrogen into contact with the ammonia synthesis catalyst. The mixing ratio (nitrogen: hydrogen) of nitrogen molecules (nitrogen gas) and hydrogen molecules (hydrogen gas) in the mixed gas to be used in the flow reaction is usually in the range of 1 : 10 to 10 : 1, and preferably 1 : 5 to 5 : 1 in mass ratio. The total flow rate of the nitrogen molecules (nitrogen gas) and the hydrogen molecules (hydrogen gas) is preferably, for example, 30 to 500 ml/min (converted at 25°C and 1 atm), and the space velocity (unit catalyst weight, the volume of the gas that comes into contact with the catalyst per unit time (converted at 25°C and 1 atm)) is preferably 9 to 150 1/h·g-cat. The contact time (reaction time) is not particularly limited, and may be, for example, in the range of 1 to 24 hours.

The present invention also relates to an ammonia synthesis apparatus utilizing the ammonia synthesis catalyst of the present invention. One example of the synthesis apparatus comprises a reaction tube at least partially comprising a layer of the ammonia synthesis catalyst of the present invention. The reaction tube may have a plurality of layers comprising the ammonia synthesis catalyst of the present invention. The reaction tube may be connected to a gas supply tube for flowing gas such as H₂ or N₂, and/or a collection tube for collecting ammonia to be synthesized. In addition, the ammonia synthesis apparatus may comprise a heater for heating the gas supplied from the gas supply tube and/or a pressurizer for pressurizing the gas.

### EXAMPLES

Hereinafter, the present invention will be described in more detail in the basis of Examples, but the following Examples do not limit the present invention.

### 1. Methods for measuring physical property values

Physical property values in Examples and Comparative Examples were measured by the following methods.

### <BET specific surface area>

The measurement of the BET specific surface area of the carriers in the nitrogen activation catalyst-supporting bodies and the hydrogen activation catalyst-supporting bodies used in Examples and Comparative Examples was conducted by allowing nitrogen gas to be adsorbed on the surface of the target object at a liquid nitrogen temperature and measuring the amount of the nitrogen having been monolayer-adsorbed. The measurement conditions are as follows. The results are shown in Table 1.

### [Measurement conditions]

Apparatus: BELSORP-mini II manufactured by MicrotracBEL Corp.
Adsorption gas: Nitrogen 99.99995 vol%
Adsorption temperature: Liquid nitrogen temperature -196°C

### <Measurement of iodine adsorption amount/methylene blue adsorption amount (iodine value/MB value)>

The iodine value/MB values of the carriers in the nitrogen activation catalyst-supporting bodies used in Examples and Comparative Examples were measured and calculated in accordance with the following method. The results are shown in Table 1.

Iodine adsorption amount: In accordance with JIS K 1474, activated carbon was added in varied amounts to a 0.05 mol/L iodine solution (potassium iodide was also dissolved: 0.15 mol/L), and the mixture was shaken for 15 minutes. Then, the activated carbon-containing solution was centrifuged. The supernatant was titrated with a 0.1 mol/L sodium thiosulfate solution to determine the residual iodine concentration, and an adsorption isotherm was then created. The adsorption amount at a residual iodine concentration of 2.5 g/L was taken as an iodine value.

Methylene blue adsorption amount: In accordance with JIS K 1474, 1.2 g of methylene blue in terms of dry mass was dissolved in a phosphate buffer solution having a pH of 7.0 and the volume was adjusted to 1 L. Activated carbon was added in varied amounts to the solution and shaken for 30 minutes. Thereafter, for filtrates obtained by removing the activated carbon by filtration, the absorbance was measured at 665 nm to determine the residual concentration, and an adsorption isotherm was then created. The adsorption amount Q (mg/g) at a residual concentration of 0.24 mg/L was determined, converted to the adsorption amount of the methylene blue solution by the following formula, and the adsorption amount of the methylene blue solution was taken as the methylene blue adsorption capability M (mL/g). $M = Q / 1.2$

It is noted that the value of M is rounded off and expressed in increments of 10 mL.

### <Volume-weighted average particle size D₅₀>

### (Average particle size D₅₀ by laser scattering method)

The average particle size (particle size distribution) of a nitrogen activation catalyst precursor-supporting body and a hydrogen activation catalyst precursor-supporting body was measured by the following method.

A supporting body to be measured was charged into an aqueous solution comprising 5 mass% of a surfactant ("ToritonX100" manufactured by Wako Pure Chemical Industries, Ltd.), and treated with an ultrasonic cleaner for 10 minutes or more to be dispersed in the aqueous solution. The particle size distribution was measured using this dispersion. The particle size distribution measurement was conducted using a particle size and particle size distribution analyzer ("Microtrac MT3300EXII" manufactured by MicrotracBEL Corp.). D₅₀ is the particle size at which the cumulative volume is 50%, and this value was used as the average particle size. The results are shown in Table 1.

### <Ammonia generation rate>

The ammonia generation rate of the ammonia synthesis catalysts prepared in Examples and Comparative Examples was evaluated in accordance with the following method.

### (Ion chromatographic analysis)

The ammonia generation amount was determined by dissolving the generated ammonia gas in a 2.5 mM oxalic acid solution in ultrapure water and the solution was analyzed by ion chromatography using an absolute calibration curve method. The measurement conditions are as follows.

### [Measurement conditions]

Apparatus: HIC-20A sp manufactured by Shimadzu Corporation
Column: Shim-pack IC-C4 manufactured by Shimadzu Corporation
Length: 150 mm, inner diameter: 4.6 mm
Eluent: Aqueous oxalic acid (2.5 mM) solution
Column temperature: 40°C
Flow rate: 1.0 mL/min

### 2. Preparation of ammonia synthesis catalyst precursor

### (1) Preparation of nitrogen activation catalyst precursor

(H₃O)₂[(Mo₆Cl₈)Cl₆]·6H₂O was synthesized in accordance with the method described in Inorganic Synthesis, 1970, 12, p. 170. A material in which this was appropriately supported on a carrier was used as a nitrogen activation catalyst precursor-supporting body.

### (2) Preparation of hydrogen activation catalyst precursor

As Co(acac)₂·2H₂O, a commercially available product (manufactured by Tokyo Chemical Industry Co., Ltd.) was used. A material in which this was appropriately supported on a carrier was used as a hydrogen activation catalyst precursor-supporting body.

As Co (cobalt) oxide, a material in which this was supported on a carrier by the following method was used.

3000 mg of Co(NO₃)₂·6H₂O was weighed, 12 g of water was added thereto, and the mixture was shaken to dissolve Co(NO₃)₂·6H₂O in water. Thereby, an aqueous solution of Co(NO₃)₂·6H₂O was obtained. Subsequently, CeO₂ as a carrier was weighed to attain a prescribed content described in Table 1, the aqueous solution of Co(NO₃)₂·6H₂O was added thereto, and the mixture was shaken by hand. Subsequently, water was distilled off from the suspension under reduced pressure at around 60°C, and the residue was dried to afford a Co(NO₃)₂·6H₂O-CeO₂-supporting body. The powder sample obtained was ground in a mortar to be uniform, and then stored in the air.

The Co(NO₃)₂·6H₂O-CeO₂-supporting body was filled in a quartz glass reaction tube having an inner diameter of 16 mmΦ, the quartz glass reaction tube was then mounted to a flow reactor, and a reaction was conducted at normal pressure under the following reaction conditions.

### [Reaction conditions]

Air flow rate: 100 mL/min (converted at 25°C and 1 atm)
First temperature raising condition/temperature raising time: 20°C to 110°C/90 min
(That is, the temperature raising rate is 1 K/min.)
First holding temperature/holding time: 110°C/12 h
Second temperature raising condition/temperature raising time: 110°C to 450°C/5 h and 40 min
(That is, the temperature raising rate is 1 K/min.)
Second holding temperature/holding time: 450°C/4 h

Thereby, a Co (cobalt) oxide-CeO₂-supporting body was obtained, and then stored in the air.

### (3) Preparation of ammonia synthesis catalyst precursor

### (i) Examples 1 and 3 and Comparative Example 1

About 10 mg of (H₃O)₂[(Mo₆Cl₈)Cl₆]·6H₂O as a halide cluster was weighed, methanol having a weight 800 times the weight of the halide cluster was added, and the mixture was shaken by hand to dissolve (H₃O)₂[(Mo₆Cl₈)Cl₆]·6H₂O in methanol. Thereby, a solution of (H₃O)₂[(Mo₆Cl₈)Cl₆]·6H₂O in methanol was obtained.

Subsequently, in accordance with the description in Table 1, activated carbon 1, activated carbon 3, or zeolite as a carrier was weighed to attain a prescribed content, and the solution of (H₃O)₂[(Mo₆Cl₈)Cl₆]·6H₂O in methanol was added thereto. By stirring at room temperature, (H₃O)₂[(Mo₆Cl₈)Cl₆]·6H₂O was supported on the carrier. Thereby, a suspension of the cluster-supporting body was obtained.

For the suspension obtained, methanol was distilled off from the suspension under reduced pressure, and the cluster-supporting body was dried, affording a powder sample of a halide cluster-supporting body of a nitrogen activation catalyst precursor. The powder sample obtained was ground in a mortar to be uniform, and then stored in the air.

Subsequently, the halide cluster-supporting body obtained, Co(acac)₂·2H₂O, and CeO₂ were weighed to weigh about 400 mg in total in the prescribed contents described in Table 1, and these were put together with several agate balls into an agate container for ball milling. The powder in the agate container was mixed to be uniform by rotating the agate container at a rotation speed of 250 rpm for 180 seconds using a planetary ball mill P-6 manufactured by Fritsch GmbH, affording a powder sample of an ammonia synthesis catalyst precursor. The powder sample of the catalyst precursor obtained was stored in the air.

### (ii) Example 4

About 10 mg of (H₃O)₂[(Mo₆Cl₈)Cl₆]·6H₂O as a halide cluster was weighed, and activated carbon 4 was weighed in accordance with the description in Table 1 to attain a prescribed content, then added to the halide cluster weighed, and 15 mL of hexane was further added thereto. (H₃O)₂[(Mo₆Cl₈)Cl₆]·6H₂O was supported on the carrier by applying ultrasonic waves using an ultrasonic cleaner while manually stirring at room temperature. Thereby, a suspension of the cluster-supporting body was obtained. For the suspension obtained, hexane was distilled off from the suspension under reduced pressure, and the halide cluster-supporting body was dried, affording a powder sample of the halide cluster-supporting body of the nitrogen activation catalyst precursor. The powder sample obtained was stored in the air.

Subsequently, about 50 mg of the halide cluster-supporting body obtained was weighed, and the Co oxide-CeO₂-supporting body was weighed to attain a prescribed content described in Table 1, and then added to the halide cluster-supporting body weighed, and then both were put together with several agate balls into an agate container for ball mill mixing. The powder in the agate container was mixed to be uniform by rotating the agate container at a rotation speed of 100 rpm for 25 seconds using a planetary ball mill P-6 manufactured by Fritsch GmbH, affording a powder sample of an ammonia synthesis catalyst precursor. The powder sample was stored in the air.

### (iii) Example 2 and Comparative Example 2

About 13 mg of (H₃O)₂[(Mo₆Cl₈)Cl₆]·6H₂O as a halide cluster was weighed, and activated carbon 2 or a zeolite carrier was weighed to attain a prescribed content in accordance with the description of Table 1, and both were put together with several agate balls into an agate container for ball mill mixing. The powder in the agate container was mixed to be uniform by rotating the agate container at a rotation speed of 100 rpm for 180 seconds using a planetary ball mill P-6 manufactured by Fritsch GmbH. The halide cluster-supporting body thus obtained was stored in the air. Next, about 125 mg of Co(acac)₂·2H₂O was weighed, and CeO₂ was weighed to attain a prescribed content described in Table 1, and both were put together with several agate balls into an agate container for ball mill mixing. The powder in the agate container was mixed to be uniform by rotating the agate container at a rotation speed of 250 rpm for 180 seconds using a planetary ball mill P-6 manufactured by Fritsch GmbH. The halide cluster-supporting body was weighed to attain a prescribed content described in Table 1 and then added to the Co(acac)₂·2H₂O-supporting body obtained as described above, and these were put together with several agate balls into an agate container for ball mill mixing. The powder in the agate container was mixed to be uniform by rotating the agate container at a rotation speed of 100 rpm for 25 seconds using a planetary ball mill P-6 manufactured by Fritsch GmbH, affording a powder sample of an ammonia synthesis catalyst precursor. The powder sample of the catalyst precursor obtained was stored in the air.

### (iv) Comparative Example 3

About 10 mg of (H₃O)₂[(Mo₆Cl₈)Cl₆]·6H₂O as a halide cluster was weighed, methanol having a weight 800 times the weight of the halide cluster was added, and the mixture was shaken by hand to dissolve (H₃O)₂[(Mo₆Cl₈)Cl₆]·6H₂O in methanol. Thereby, a solution of (H₃O)₂[(Mo₆Cl₈)Cl₆]·6H₂O in methanol was obtained.

Subsequently, 3000 mg of Co(NO₃)₂·6H₂O was weighed, 12 g of water was added thereto, and the mixture was shaken to dissolve Co(NO₃)₂·6H₂O in water. Thereby, an aqueous solution of Co(NO₃)₂·6H₂O was obtained. Next, zeolite as a carrier was weighed to attain a prescribed content described in Table 1, the aqueous solution of Co(NO₃)₂·6H₂O was added thereto, and the mixture was shaken by hand. Thereafter, water was distilled off from the suspension under reduced pressure at around 60°C, and the residue was dried to afford a Co(NO₃)₂·6H₂O-zeolite-supporting body. The powder sample obtained was ground in a mortar to be uniform, and then stored in the air.

Finally, the Co(NO₃)₂·6H₂O-zeolite-supporting body was filled in a quartz glass reaction tube having an inner diameter of 16 mmΦ, the quartz glass reaction tube was then mounted to a flow reactor, and a reaction was conducted at normal pressure under the following reaction conditions.

### [Reaction conditions]

Air flow rate: 100 mL/min (converted at 25°C and 1 atm)
First temperature raising condition/temperature raising time: 20°C to 110°C/90 min
(That is, the temperature raising rate is 1 K/min.)
First holding temperature/holding time: 110°C/12 h
Second temperature raising condition/temperature raising time: 110°C to 450°C/5 h and 40 min
(That is, the temperature raising rate is 1 K/min.)
Second holding temperature/holding time: 450°C/4 h

Thereby, a Co (cobalt) oxide-zeolite-supporting body was obtained, and then stored in the air.

Subsequently, the Co (cobalt) oxide-zeolite-supporting body was weighed to attain a prescribed content described in Table 1, and the solution of (H₃O)₂[(Mo₆Cl₈)Cl₆]·6H₂O in methanol was added thereto, and the resulting mixture was stirred at room temperature, thereby affording a suspension of a cluster-Co oxide-supporting body. For the suspension obtained, methanol was distilled off from the suspension under reduced pressure, and the supporting body was dried, affording a powder sample of an ammonia synthesis catalyst precursor. The powder sample obtained was ground in a mortar to be uniform. The powder sample of the catalyst precursor obtained was stored in the air.

### 3. Synthesis of ammonia

### (1) Catalyst activation

The catalyst precursor prepared in each of Examples 1 to 4 and Comparative Examples 1 to 3 was filled in a reaction tube made of metal (made of Inconel 625) having an inner diameter of 9.4 mmΦ * 290 mm at a prescribed weight such that the total weight of the cluster (comprising H, O, and Cl), Co (excluding the acac part and hydration water part of Co(acac)₂·2H₂O and the oxygen part of Co oxide), and the carrier was 200.0 mg, the reaction tube was then mounted to a flow reactor, and hydrogen (purity: 99.99999% or more) was flowed through the reaction tube to conduct activation under the following conditions.

### [Activation conditions]

Hydrogen flow rate: 300 mL/min (converted at 25°C and 1 atm)
Temperature raising condition/temperature raising time:
   · 20°C to 550°C/1 hour in Examples 1 and 2 and Comparative Example 2
   · 20°C to 575°C/1 hour in Example 4
   ·20°C to 600°C/1 hour in Example 3 and Comparative Examples 1 and 3
Holding temperature/holding time:
   · 550°C/3 hours in Examples 1 and 2 and Comparative Example 2
   · 575°C/3 hours in Example 4
   · 600°C/3 hours in Example 3 and Comparative Examples 1 and 3

### (2) Ammonia synthesis reaction

The indicated temperature of the catalyst layer was lowered to 300°C (in Comparative Example 3, the temperature was lowered to 400°C), the pressure in the reaction tube was adjusted to 1 MPa (absolute pressure) using a nitrogen/hydrogen mixed gas (1/3 by volume, 0.00001 vol% or less of oxygen, 0.00005 vol% or less of water). Thereafter, the nitrogen/hydrogen mixed gas was flowed at a flow rate of 60 mL/min (converted at 25°C and 1 atm), and the ammonia-containing gas discharged from the outlet was bubbled into a trapping solution to collect ammonia. And then, the activity of the ammonia synthesis catalyst in each of Examples and Comparative Examples was evaluated by the method described in the section of <Ammonia generation rate>. The results are shown in Table 1.

**[Table 1]**

| | Nitrogen activation catalyst-supporting body | | | | | Hydrogen activation catalyst-supporting body | | | | Ammonia synthesis catalyst | |
|---|---|---|---|---|---|---|---|---|---|---|---|
| | Catalyst component | Carrier | | | | Catalyst component | Carrier | | | Catalyst composition ratio | NH₃ generation rate |
| | Type | Type | Specific surface area m²/g | Iodine value/MB value | D₅₀ (µm) | Type | Type | Specific surface area m²/g | D₅₀ (µm) | N₂ catalyst component/ N₂ carrier/H₂ catalyst component/H₂ carrier | Mmol·g_{cat}⁻¹·h⁻¹ |
| Example 1 | Mo₆Cl₈ | Activated carbon 1 | 1400 | 4.77 | 40 | Co | CeO₂ | 92 | 40 | 2/18/12/68 | 2211 |
| Example 2 | Mo₆Cl₈ | Activated carbon 2 | 1500 | 4.59 | 120 | Co | CeO₂ | 92 | 40 | 2.5/17.5/12/68 | 2430 |
| Example 3 | Mo₆Cl₈ | Activated carbon 3 | 1600 | 4.59 | 120 | Co | CeO₂ | 92 | 40 | 2/18/12/68 | 1883 |
| Example 4 | Mo₆Cl₈ | Activated carbon 4 | 1600 | 7.00 | 51 | Co | CeO₂ | 92 | 40 | 2.5/17.5/12/68 | 1657 |
| Comparative Example 1 | Mo₆Cl₈ | Zeolite | 710 | 20.0 | - | Co | CeO₂ | 92 | - | 2/18/12/68 | 1510 |
| Comparative Example 2 | Mo₆Cl₈ | Zeolite | 710 | 20.0 | - | Co | CeO₂ | 92 | - | 2.5/17.5/12/68 | 1203 |
| Comparative Example 3 | Nitrogen activation catalyst component: Mo₆Cl₈ | Zeolite | 710 | 20.0 | - | Supported on zeolite together with nitrogen activation catalyst component | | | | 1/84/15 (N₂ catalyst/carrier/ H₂ catalyst) | 189 |
| | Hydrogen activation catalyst component: Co | | | | | | | | | | |

## Claims

1. An ammonia synthesis catalyst precursor comprising: a nitrogen activation catalyst precursor-supporting body (A1) comprising a nitrogen-activating catalyst component precursor supported on a carrier composed of a porous body having a specific surface area of 1000 m²/g or more; and a hydrogen activation catalyst precursor-supporting body (B1) comprising a hydrogen-activating catalyst component precursor supported on a carrier different from the preceding carrier.

2. The ammonia synthesis catalyst precursor according to claim 1, wherein the carrier composed of the porous body is a carrier having a ratio of an iodine adsorption amount to a methylene blue adsorption amount (iodine adsorption amount/methylene blue adsorption amount) of 10 or less.

3. The ammonia synthesis catalyst precursor according to claim 1 or 2, wherein the nitrogen-activating catalyst component precursor is a metal complex comprising at least one metal atom belonging to Group V, Group VI, or Group VII.

4. The ammonia synthesis catalyst precursor according to claim 1 or 2, wherein the nitrogen-activating catalyst component precursor comprises at least one metal atom selected from the group consisting of molybdenum (Mo), niobium (Nb), tungsten (W), tantalum (Ta), and rhenium (Re).

5. The ammonia synthesis catalyst precursor according to claim 3, wherein the metal complex is a polynuclear metal complex comprising at least three metal atoms selected from the group consisting of molybdenum (Mo), niobium (Nb), tungsten (W), tantalum (Ta), and rhenium (Re).

6. The ammonia synthesis catalyst precursor according to claim 1 or 2, wherein the carrier composed of the porous body is a carbonaceous material.

7. The ammonia synthesis catalyst precursor according to claim 1 or 2, wherein the hydrogen-activating catalyst component precursor comprises at least one transition metal selected from the group consisting of iron (Fe), cobalt (Co), rhodium (Rh), iridium (Ir), nickel (Ni), copper (Cu), palladium (Pd), and platinum (Pt).

8. The ammonia synthesis catalyst precursor according to claim 1 or 2, wherein the carrier supporting the hydrogen-activating catalyst component precursor is a porous body of an inorganic material, or a layered compound.

9. The ammonia synthesis catalyst precursor according to claim 8, wherein the inorganic material comprises at least one selected from the group consisting of carbon, boron nitride, carbon nitride, silica, alumina, aluminosilicate, sodium aluminosilicate, aluminum magnesium hydroxide carbonate, titania, titanosilicate, zirconia, zirconosilicate, zinc oxide, and ceria.

10. A method for producing the ammonia synthesis catalyst precursor according to claim 1, comprising:
making a carrier composed of a porous body support a nitrogen-activating catalyst component precursor to form a nitrogen activation catalyst precursor-supporting body (A1) comprising a nitrogen-activating catalyst component precursor supported on the carrier; and
mixing a hydrogen activation catalyst precursor-supporting body (B1) comprising a hydrogen-activating catalyst component precursor supported on a carrier different from the carrier composed of the porous body, with the supporting body (A1).

11. The method according to claim 10, wherein the nitrogen-activating catalyst component precursor is a polynuclear metal complex having at least three metal atoms, and the hydrogen-activating catalyst component precursor is a metal compound comprising metal.

12. An ammonia synthesis catalyst comprising: a nitrogen activation catalyst-supporting body (A2) comprising a nitrogen-activating catalyst component supported on a carrier composed of a porous body having a specific surface area of 1000 m²/g or more; and a hydrogen activation catalyst-supporting body (B2) comprising a hydrogen-activating catalyst component supported on a carrier different from the preceding carrier.

13. A method for producing the ammonia synthesis catalyst according to claim 12, comprising bringing the ammonia synthesis catalyst precursor according to claim 1 into contact with hydrogen molecules.

14. A method for producing ammonia, comprising bringing the ammonia synthesis catalyst according to claim 12 into contact with a mixed gas comprising nitrogen and hydrogen.
